# EUROPEAN PATENT APPLICATION

(11) **EP 1 783 620 A1**
(43) Date of publication of application: **09.05.2007**
(21) Application number: 05766259.5
(22) Date of filing: 20.07.2005
(51) Int. Cl.: G06F 13/00, H04L 12/28

(54) **COMMUNICATION SYSTEM**

(30) Priority: 21.07.2004 JP 2004212418
(71) Applicant: Yokogawa Electric Corporation, Tokyo 180-8750 (JP)
(72) Inventor: HAYASHI, Shunsuke, c/o YOKOGAWA ELECTRIC CORP., Musashino-shi, Tokyo 1808750 (JP)
(74) Representative: Grünecker, Kinkeldey, Stockmair & Schwanhäusser Anwaltssozietät
(86) International application number: PCT/JP2005/013310
(87) International publication number: WO 2006/009168

(57) **Abstract**

A communication system has: a controller that is connected to a plurality of field devices for inputting and outputting an analog signal and a digital signal; and a system computer that is provided in an upper hierarchical layer of the controller, and communicates with one of the plurality of field devices by using the digital signal through the controller. The communication system further has a path establishing section that selects a field device for communication from the plural field devices, and establishes a virtual communication channel to be a communication path for performing one-to-one communication with the selected field device via the system computer and the controller.

## Description

### Technical Field

The present invention relates to a communication system for communicating with a field device by using a digital signal through a virtual communication channel.

### Background Art

It is necessary to perform hybrid communication in order to perform communication from a personal computer with respect to the field device for inputting and outputting an analog signal of 4 to 20mA, 1 to 5V, etc.
The hybrid communication is a communication for exchanging data with the field device by using both the analog signal of 4 to 20mA, etc., and a digital signal superposed on the analog signal.
The analog signal from the field device is utilized for control by a central controller for process control, and the digital signal is mainly utilized for a maintenance work such as parameter setting and a device adjustment by a portable terminal used by a worker on a field site. Accordingly, a line is drawn about the use between the analog signal and the digital signal.

A way of the hybrid communication with the field device will next be explained.

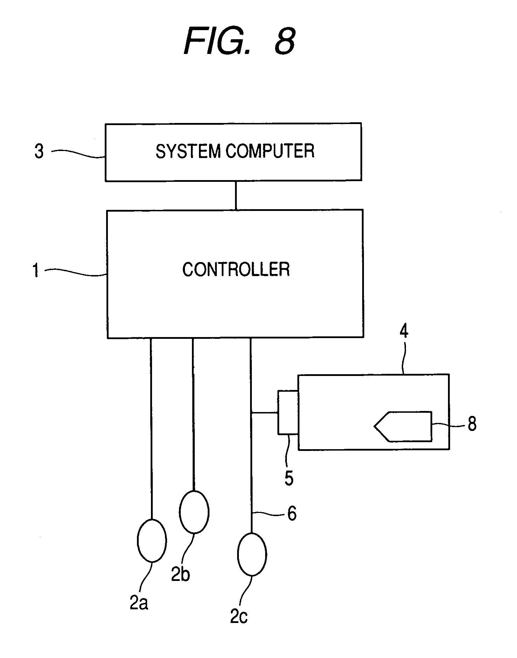

Fig. 8 is a view showing a configuration example of the communication system as a related art.
In Fig. 8, plural field devices 2a to 2c for inputting and outputting the analog signal are connected to a controller 1. The field devices 2a to 2c exist in the field site, and detect a process value of temperature, pressure, a liquid level, etc. The field devices 2a to 2c output a detecting signal of the process value by the analog signal of 4 to 20mA, 1 to 5V, etc. This analog signal is inputted to the controller 1. The controller 1 converts this input signal to a digital signal, makes a control arithmetic calculation, and calculates an operation amount. This operation amount is outputted as the analog signal of 4 to 20mA, 1 to 5V, etc., and the field devices 2a to 2c are operated by this output. For example, when the field device is a valve, a degree of opening of the valve is controlled.

A system computer 3 is located on an upper level side of the controller 1. The system computer 3 and the controller 1 constitute a process control system. The system computer 3 manages the process control system. For example, a personal computer may be used as the system computer 3.

For example, a portable terminal 4 is a notebook type personal computer, and application programs 8 according to various kinds of field devices are stored. It is premised that one-to-one communication with the field device is performed as a connection mode of the portable terminal 4. Therefore, a converter 5 is connected to RS232C port of the portable terminal 4, and this converter 5 is connected to a signal line 6 connected to the field device as a communication partner.
The portable terminal 4 superposes the digital signal on the analog signal on the signal line 6, and communicates with the field device.

The analog signal from the field devices 2a to 2c is utilized for control by the controller 1. The digital signal superposed on the analog signal is utilized in communication for performing a parameter setting, a device adjustment, etc., with respect to the field device from the portable terminal 4.

In the example of Fig. 8, connection for performing one-to-one communication is premised as a connection mode of the portable terminal 4. Therefore, when the field device as the communication partner is changed, the signal line for connecting the portable terminal 4 must be changed.

The analog signal and the digital signal can be used by the controller at present. There is a communication system that can perform communication with the field device by executing the application program in the system computer provided at the center. If this communication system is utilized suitably, the parameter setting and the device adjustment of the field device can be made even when the operator does not go to the field site.

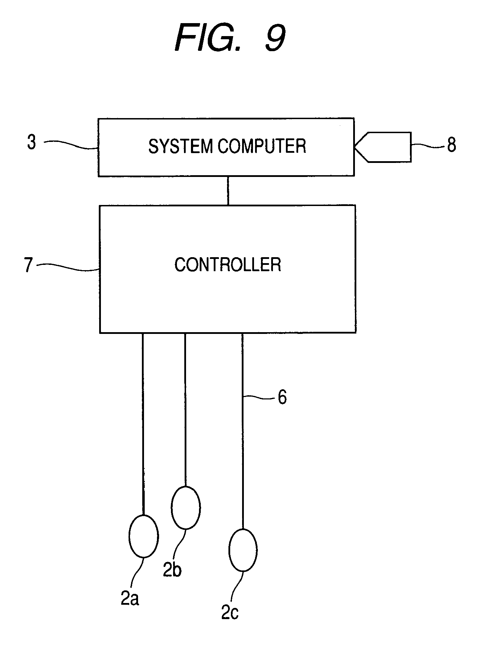

Fig. 9 is a view showing a configuration example of such a communication system.
In Fig. 9, a controller 7 can also employ the digital signal in addition to the analog signal. The application program is executed in the system computer 3, and communication with the field devices 2a to 2c is performed.

A distributed control system connecting a HART device thereto for performing the hybrid communication is described in JP-A-2001-318837.

JP-A-2001-318837 is referred as the related art.

### Disclosure of the Invention

### Problems that the Invention is to Solve

However, connection for performing the one-to-one communication is premised in the application program 8 for the above portable terminal. Therefore, a program change or a redesign is required to execute the application program 8 in the system computer 3. Addition of a device selecting function for selecting the field device for communication, a change of an interface for accessing the field device via a control system instead of a converter (modem), etc., are required as change points.

An object of the present invention is to provide a communication system that can perform one-to-one communication with the selected field device without redesigning the application program for the portable terminal designed to perform the one-to-one communication as a premise by establishing a virtual communication channel to be a communication path for performing the one-to-one communication with the field device.

### Means for Solving the Problems

The present invention provides a communication system comprising:
a controller that is connected to a plurality of field devices for inputting and outputting an analog signal and a digital signal;
a system computer that is provided in an upper hierarchical layer of the controller, and communicates with one of the plurality of field devices by using the digital signal through the controller; and
a path establishing section that selects a field device for communication from the plural field devices, and establishes a virtual communication channel to be a communication path for performing one-to-one communication with the selected field device via the system computer and the controller.

In the communication system, the path establishing section is provided in at least one of the controller and the system computer.

The communication system further comprises a converting section for converting a communication signal being transmitted through the virtual communication channel,
wherein the converting section converts a communication protocol and a communication system that are used within the controller into a communication protocol and a communication system that are used in the communication with the selected field device, and
the converting section is provided in at least one of the controller and the system computer.

The communication system has a communication section for activating an application program in the system computer in a state that the virtual communication channel is established, and performing the one-to-one communication with the selected field device via the virtual communication channel.

In the communication system, the communication section executes the application program, and performs at least one of a parameter setting and a device adjustment with respect to the selected field device.

In the communication system, the communication section frees the virtual communication channel and releases the selection of the selected field device when execution of the application program is completed.

In the communication system, the communication section executes the application program, and designates a virtual serial port to be a connection portion with the virtual communication channel.

In the communication system, a signal from a terminal having a communication function is received by a serial port of the system computer, and
the communication section transmits the signal to the selected field device via the virtual communication channel.

The communication system further comprises a communication control section that, when an access is attempted from other application program being executed in the system computer to the field device that is not connected to the virtual communication channel, allows the access.

The communication system further comprises a communication control section that, when an access is attempted from other application program being executed in the system computer to the field device connected to the virtual communication channel, blocks the access.

The communication system further comprises a recording section for obtaining information flowing through the virtual communication channel, and recording a parameter that is set or adjusted with respect to the field device.

The communication system further comprises a recording section for, after an adjustment or a setting of a parameter of the field device by the communication via the virtual communication channel is completed, reading the parameter of the field device, and grasping and recording a changed point.

### Effect of the Invention

The above communication system has the path establishing section for establishing the virtual communication channel to be a communication path for performing one-to-one communication with the field device fro communication. When the application program is activated in the system computer in the state that the virtual communication channel is established, the one-to-one communication with the selected field device is performed through the virtual communication channel. At this time, a communication signal is converted similarly as being passed through a converter (modem) and is transmitted.
Thus, it is possible to perform one-to-one communication with the selected field device without redesigning the application program for a portable terminal that is designed to perform the one-to-one communication as a premise.
Further, it is possible to perform a maintenance work such as a parameter setting and a device adjustment of the field device by using the application program for a portable terminal that is designed to perform the one-to-one communication as a premise as it is.

### Brief Description of the Drawings

Fig. 1 is a configuration view showing a first embodiment of the present invention.
Fig. 2 is a flow chart showing an operating procedure of a communication system of Fig. 1.
Fig. 3 is a configuration view showing a second embodiment of the present invention.
Fig. 4 is a configuration view showing a third embodiment of the present invention.
Fig. 5 is a configuration view showing a fourth embodiment of the present invention.
Fig. 6 is a configuration view showing a fifth embodiment of the present invention.
Fig. 7 is a configuration view showing a sixth embodiment of the present invention.
Fig. 8 is a view showing a configuration example of a communication system as a related art.
Fig. 9 is a view showing a configuration example of a communication system as a related art.

### Description of the Reference Numerals and Signs

10 controller
11 path establishing section
12 converting section
13 communication control section
20a to 20c field device
30 system computer
31 communication section
32, 51, 61 application program
33 virtual serial port
40, 41 virtual communication channel
50 notebook type personal computer
60 dedicated tool

### Best Mode for Carrying Out the Invention

The present invention will next be explained in detail by using the drawings.

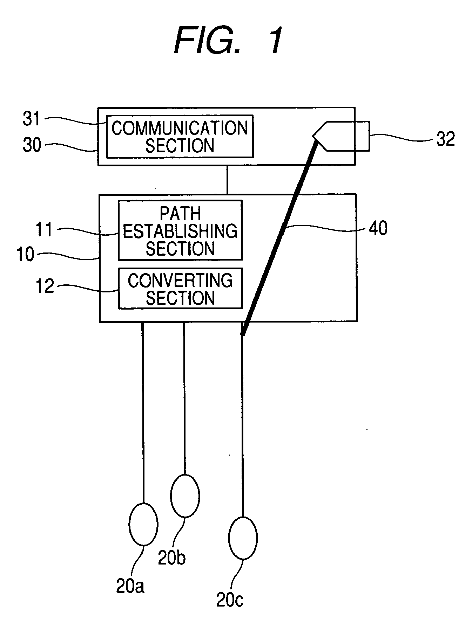

Fig. 1 is a configuration view showing one embodiment of the present invention. In Fig. 1, the same portions as the above-mentioned portions are designated by the same reference numerals.
In Fig. 1, a controller 10 can exchange an analog signal and a digital signal between the controller 10 and field devices 20a to 20c.

A system computer 30 and the controller 10 constitute a process control system.
The system computer 30 is on an upper level side of the controller 10, and manages the process control system. The system computer 30 has a communication section 31, and exchanges the digital signal with field devices 20a to 20c via the controller 10.

The system computer 30 has a function of displaying a list of communicable field devices. With respect to the display, all the field devices may be displayed on a list, or the field devices may be also hierarchically displayed in accordance with types, used places, etc. Integration device management is performed by the system computer 30 by displaying the devices.

A field device to be a communication partner is selected from the field devices 20a to 20c displayed on the screen of the system computer 30.
The controller 10 has a path establishing section 11 and a converting section 12. The path establishing section 11 establishes a virtual communication channel 40 to be a communication path for performing one-to-one communication with the selected field device via the system computer 30 and the controller 10.

It is sufficient to arrange the path establishing section 11 in at least one of the controller 10 and the system computer 30. When the path establishing section 11 is provided in both the controller 10 and the system computer 30, the system computer 30 and the controller 10 are operated in association with each other, and establish the virtual communication channel.

The converting section 12 converts a signal being transmitted through the virtual communication channel 40. The converting section 12 converts a communication protocol and a communication system used within the controller 10 into a communication protocol and a communication system used in communication with the field device.
It is sufficient to arrange the converting section 12 in at least one of the controller 10 and the system computer 30.

In a program for one-to-one communication executed in the notebook type personal computer, there are many programs in which it is premised that digital communication with the field device is performed by utilizing the converter connected to RS232C port of the notebook type personal computer. In this embodiment, the path establishing section 11 and the converting section 12 are provided in the controller 10. Therefore, it is possible to perform digital communication with the field device by using the program as it is, in which the one-to-one communication is a premise.

The communication section 31 provided in the system computer 30 activates an application program 32 in the system computer 30 in a state that the virtual communication channel 40 is established. The communication section 31 also performs one-to-one communication via the virtual communication channel 40 with the selected field device by using a port of the controller 10 to which the selected field device is connected. At this time, a communication signal is converted similarly as being passed through a converter (modem), and transmitted. Accordingly, the activated application program 32 operates without any change as in one-to-one connection with the field device as shown in the example of Fig. 8, or without any consciousness that the communication is performed via the system, and can perform communication with the field device.

The communication section 31 performs a maintenance work such as a parameter setting and a device adjustment within the field device by utilizing the application program 32.
After the required maintenance work is completed and the application program 32 is completed, the communication section 31 frees the virtual communication channel 40, and releases the selection of the field device.

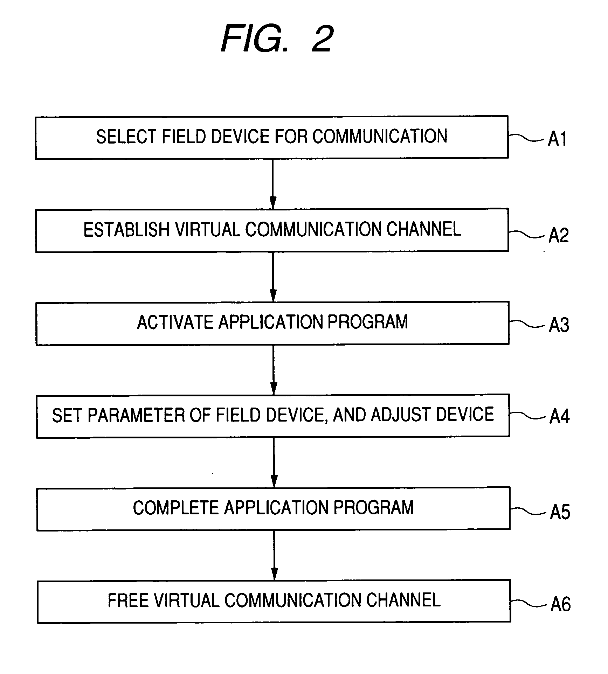

Fig. 2 is a flow chart showing an operating procedure of the communication system of Fig. 1.
The operation will be explained in accordance with a step order of the flow chart.
(A1) The field device for performing the one-to-one communication is selected from the screen of the system computer 30.
(A2) The path establishing section 11 establishes the virtual communication channel for performing the one-to-one communication.
(A3) The application program 32 is activated.
(A4) The communication section 31 executes the application program 32, and communicates with the field device through the virtual communication channel, and performs the parameter setting and the device adjustment of the field device. In the setting and the adjustment, the application program 32 may be also operated by a user.
(A5) When the parameter setting and the device adjustment are completed, the communication section 31 completes the application program 32.
(A6) The communication section 31 frees the virtual communication channel.

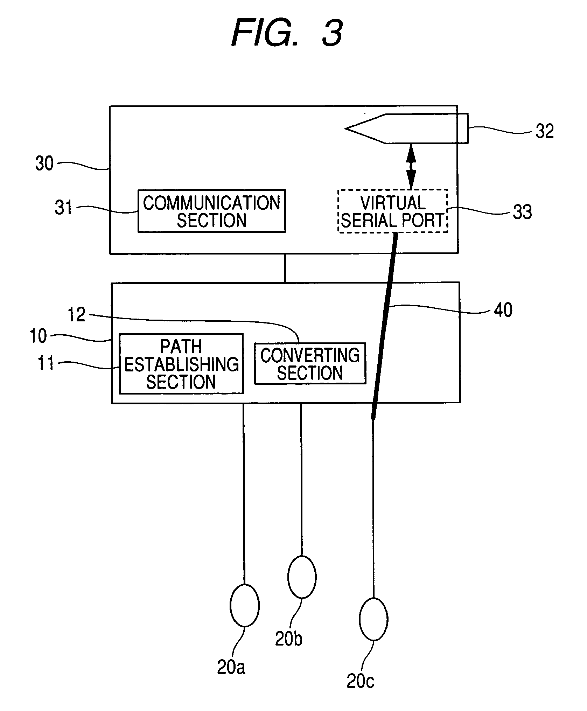

Fig. 3 is a configuration view showing a second embodiment of the present invention.
In the second embodiment, the communication section 31 executes the application program 32 and designates a virtual serial port 33 of the system computer 30, and transmits a signal to the field device through the virtual communication channel 40.

In accordance with the second embodiment, no change in the application program is required by setting that the real serial port of RS232C, etc., and the virtual serial port are different in only a port number on a software, or the like.

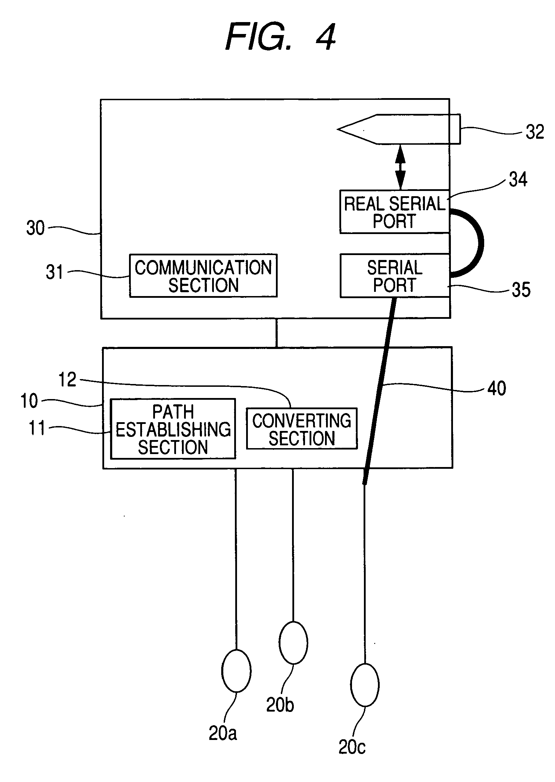

Fig. 4 is a configuration view showing a third embodiment of the present invention.
In the third embodiment, the communication section 31 executes the application program 32 and designates the real serial port 34 of the system computer 30. The communication section 31 then turns back a communication path from the real serial port 34 to other serial port 35 of the same computer, and transmits a signal of the serial port 35 to the field device through the virtual communication channel 40.

The third embodiment is effective when a port number is fixed in the application program, etc.

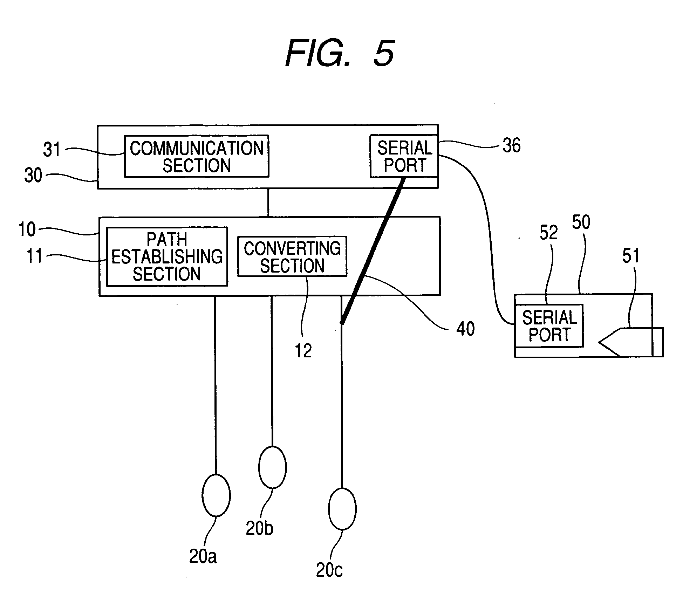

Fig. 5 is a configuration view showing a fourth embodiment of the present invention.
In the fourth embodiment, communication that an application program 51 installed in another notebook type personal computer 50 performs with respect to a serial port 52 is received by a serial port 36 of the system computer 30, and is transmitted to the field device through the virtual communication channel 40.

In accordance with the fourth embodiment, the application program requiring an operation environment different from that of the system computer 20 can be operated by the notebook type personal computer, etc. For example, the different operation environment is an environment different in OS or hardware.

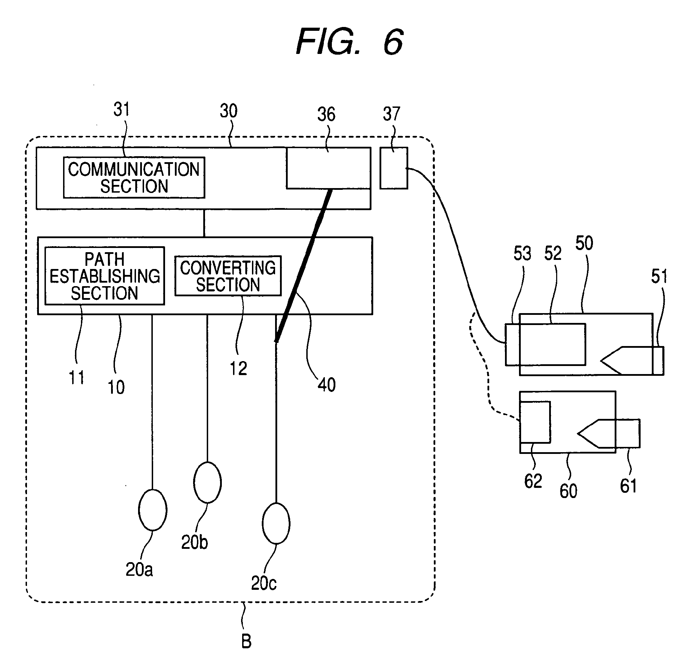

Fig. 6 is a configuration view showing a fifth embodiment of the present invention.
In the fifth embodiment, communication that the application program 51 installed in another notebook type personal computer 50 performs with respect to the serial port 52 is made to be the digital communication through a communication modem 53, and this digital communication is transmitted to the serial port 36 of the system computer 30 through the communication modem 37. Otherwise, digital communication performed by a dedicated tool 60 in which an application program 61 and a communication modem 62 are installed is received by the serial port 36 of the system computer 30 through the communication modem 37, and is transmitted to the field device through the virtual communication channel 40. For example, the dedicated tool 60 is a hand held terminal.
One field device is simulated by including a physical layer, in a portion shown as B in Fig. 6.

The fifth embodiment is effective to practically use the application program that is completely integrated with the dedicated tool.

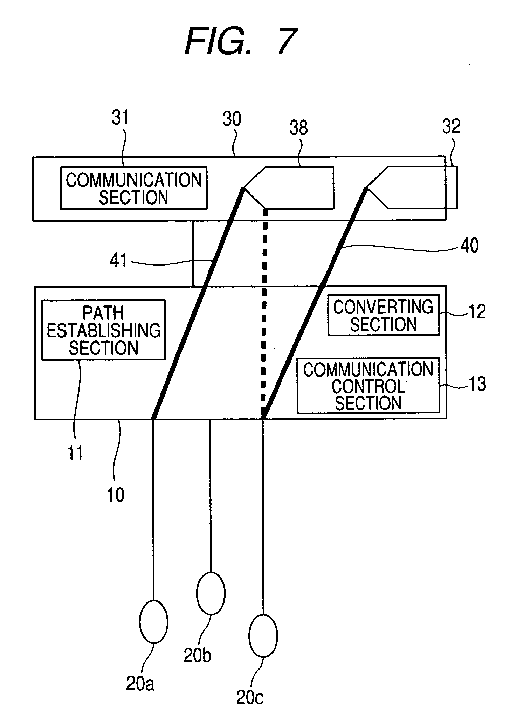

Fig. 7 is a configuration view showing a sixth embodiment of the present invention.
In the sixth embodiment, it is supposed that the virtual communication channel 40 is established between the application program 32 and the field device 20c. The controller 10 further has a communication control section 13.
When there is access from other application program 38 to the field device 20a in this state, the communication control section 13 allows this access. At this time, a new virtual communication channel 41 is established.
Further, when there is access from the application program 38 to the field device 20c, the communication control section 13 blocks this access.

The following additional function may be also added to the communication system of the present invention.
A recording section may be also provided for obtaining information flowing through the virtual communication channel, and recording a parameter being set and adjusted with respect to the field device.
The present invention may also have a recording section for, after the adjustment and setting of a parameter of the field device are completed in communication through the virtual communication channel, reading the parameter of the field device and grasping and recording a changed point.

The present application is based on Japanese patent application (patent application No. 2004-212418) filed on July 21, 2004, and its contents are here incorporated herein as reference.
FIG. 1
   31 COMMUNICATION SECTION
   11 PATH ESTABLISHING SECTION
   12 CONVERTING SECTION
FIG. 2
   A1 SELECT FIELD DEVICE FOR COMMUNICATION
   A2 ESTABLISH VIRTUAL COMMUNICATION CHANNEL
   A3 ACTIVATE APPLICATION PROGRAM
   A4 SET PARAMETER OF FIELD DEVICE, AND ADJUST DEVICE
   A5 COMPLETE APPLICATION PROGRAM
   A6 FREE VIRTUAL COMMUNICATION CHANNEL
FIG. 3
   33 VIRTUAL SERIAL PORT
   31 COMMUNICATION SECTION
   11 PATH ESTABLISHING SECTION
   12 CONVERTING SECTION
FIG. 4
   34 REAL SERIAL PORT
   35 SERIAL PORT
   31 COMMUNICATION SECTION
   11 PATH ESTABLISHING SECTION
   12 CONVERTING SECTION
FIG. 5
   36 SERIAL PORT
   52 SERIAL PORT
   31 COMMUNICATION SECTION
   11 PATH ESTABLISHING SECTION
   12 CONVERTING SECTION
FIG. 6
   31 COMMUNICATION SECTION
   11 PATH ESTABLISHING SECTION
   12 CONVERTING SECTION
FIG. 7
   13 COMMUNICATION CONTROL SECTION
   31 COMMUNICATION SECTION
   11 PATH ESTABLISHING SECTION
   12 CONVERTING SECTION
FIG. 8
   3 SYSTEM COMPUTER
   1 CONTROLLER
FIG. 9
   3 SYSTEM COMPUTER
   1 CONTROLLER

## Claims

1. A communication system comprising:
a controller that is connected to a plurality of field devices for inputting and outputting an analog signal and a digital signal;
a system computer that is provided in an upper hierarchical layer of the controller, and communicates with one of the plurality of field devices by using the digital signal through the controller; and
a path establishing section that selects a field device for communication from the plural field devices, and establishes a virtual communication channel to be a communication path for performing one-to-one communication with the selected field device via the system computer and the controller.

2. The communication system according to claim 1, wherein the path establishing section is provided in at least one of the controller and the system computer.

3. The communication system according to claim 1, further comprising:
a converting section for converting a communication signal being transmitted through the virtual communication channel,
wherein the converting section converts a communication protocol and a communication system that are used within the controller into a communication protocol and a communication system that are used in the communication with the selected field device, and
the converting section is provided in at least one of the controller and the system computer.

4. The communication system according to claim 1, wherein the system computer has a communication section for activating an application program in the system computer in a state that the virtual communication channel is established, and performing the one-to-one communication with the selected field device via the virtual communication channel.

5. The communication system according to claim 4, wherein the communication section executes the application program, and performs at least one of a parameter setting and a device adjustment with respect to the selected field device.

6. The communication system according to claim 4, wherein the communication section frees the virtual communication channel and releases the selection of the selected field device when execution of the application program is completed.

7. The communication system according to claim 4, wherein the communication section executes the application program, and designates a virtual serial port to be a connection portion with the virtual communication channel.

8. The communication system according to claim 4, wherein a signal from a terminal having a communication function is received by a serial port of the system computer, and
the communication section transmits the signal to the selected field device via the virtual communication channel.

9. The communication system according to claim 4, further comprising:
a communication control section that, when an access is attempted from other application program being executed in the system computer to the field device that is not connected to the virtual communication channel, allows the access.

10. The communication system according to claim 4, further comprising:
a communication control section that, when an access is attempted from other application program being executed in the system computer to the field device connected to the virtual communication channel, blocks the access.

11. The communication system according to claim 1, further comprising:
a recording section for obtaining information flowing through the virtual communication channel, and recording a parameter that is set or adjusted with respect to the field device.

12. The communication system according to claim 1, further comprising:
a recording section for, after an adjustment or a setting of a parameter of the field device by the communication via the virtual communication channel is completed, reading the parameter of the field device, and grasping and recording a changed point.
